# EUROPÄISCHE PATENTSCHRIFT

(11) **EP 0 612 678 B1**
(45) Veröffentlichungstag und Bekanntmachung des Hinweises auf die Patenterteilung: **03.07.1996**
(21) Anmeldenummer: 94102110.7
(22) Anmeldetag: 11.02.1994
(51) Int. Cl.: B65G 69/28, B62D 53/08, B60D 1/66

(54) **Fahrbare Schrägrampe**
Mobile inclined ramp
Rampe inclinée mobile

(30) Priorität: 23.02.1993 DE 9302594 U
(43) Veröffentlichungstag der Anmeldung: 31.08.1994
(73) Patentinhaber: Alten, Kurt, D-30974 Wennigsen (DE)
(72) Erfinder: Alten, Kurt, D-30974 Wennigsen (DE)
(74) Vertreter: Depmeyer, Lothar

(56) Entgegenhaltungen:
- EP-A- 0 216 075
- DE-B- 1 225 560
- US-A- 3 863 894

## Beschreibung

Die Erfindung betrifft eine fahrbare Schrägrampe mit einem auf etwa halber Länge der Schrägrampe angeordnetem, vorzugsweise einachsigen Fahrwerk, einem im Bereich eines Rampenendes angeordneten Kupplungsglied zum Ankoppeln der Schrägrampe an ein Zugfahrzeug und einer Stütze zum Halten eines Rampenendes in Kopplungshöhe, wobei das Kupplungselement eine Deichsel und das Zugfahrzeug ein Flurfördergerät sein können (siehe zum Beispiel die DE-B-1225560).

Wenn sich diese Schrägrampen in Betrieb befinden, stützt sich das mit dem Kupplungselement versehene Ende der Schrägrampe auf der Fahrbahn bzw. dem Erdboden ab. Soll nach der Beendigung des Rampenbetriebes die Schrägrampe verfahren werden, so ist es erforderlich, das mit dem Kupplungselement versehene Ende der Schrägrampe auf die Höhe der Fahrzeugkupplung anzuheben, um so die Ankoppelung vollziehen zu können. Dazu werden zwei Personen benötigt, nämlich einmal der Fahrer des Zugfahrzeuges und zum anderen eine Hilfsperson, die das Rampenende auf Höhe hält, während das Fahrzeug an die Rampe herangeführt wird.

Der Erfindung liegt nun die Aufgabe zugrunde, die eingangs erwähnten Schrägrampen so auszubilden, dass der Koppelvorgang mit einer Person bewerkstelligt werden kann.

Zur Lösung dieser Aufgabe ist erfindungsgemäss die die Stütze als Hubelement ausgeführt und sind das Kupplungsglied und die Stütze in dem Bereich des Rampenendes angeordnet, das sich beim Betrieb der Schrägrampe auf der Fahrbahn abstützt. Zweckmässigerweise wird dazu eine einseitig - ggfs. aber auch beidseitig - an der Rampe befestigte Handwinde vorgesehen, um so in einfacher Weise das Rampenende schnell und sicher anheben und in seiner Stellung bzw. auf der Höhe der Kupplung für die Dauer des Ankoppelns fixieren zu können. Somit ist der Fahrer des Zugfahrzeuges in der Lage, mit Hilfe des Hubelementes zunächst das mit Kupplungsglied ausgestattete Ende der Schrägrampe anzuheben, und zwar auf die Höhe des Kupplungsgliedes des Zugfahrzeuges. Nachdem die Schrägrampe auf diese Höhe eingestellt ist, kann er das Fahrzeug an die Schrägrampe heranfahren und die Koppelung vollziehen. Es ist dann erforderlich, das Hubelement einzuziehen bzw. ausser Wirkung kommen zu lassen, wobei es vorteilhaft ist, das Hubelement so an der Schrägrampe anzubringen, dass es von der Wirklage aus um eine waagerechte Achse verschwenkt werden kann, um so das Hubelement in eine Ruhelage zu schwenken. Somit ist nur eine Person erforderlich, um die Schrägrampe in eine zum Koppeln geeignete Lage zu führen und die Koppelung selbst auszuführen.

Weitere Einzelheitem der Erfindung werden anhand der Zeichnung erläutert, in der ein Ausführungsbeispiel der Erfindung dargestellt ist. Es zeigen :
Fig. 1 eine verfahrbare Schrägrampe in der Seitenansicht, und zwar zum Teil geschnitten,
Fig. 2 das mit dem Hubelement ausgerüstete Ende der Schrägrampe gemäss Fig. 1, und zwar mit einem in Ruhestellung befindlichen Hubelement,
Fig. 3 ein Schnitt nach der Linie III - III von Fig. 2 mit einem in der Gebrauchsstellung befindlichen Hubelement und
Fig. 4 eine Ansicht gemäss Fig. 2, jedoch mit ausgeklappter Deichsel und mit einem in der Betriebsstellung befindlichen Hubelement.

Die Schrägrampe hat zu beiden Seiten einen längs verlaufenden U-Träger 1. Die beiden Träger 1 stehen über eine grössere Anzahl Querprofile 2 in Verbindung, die auch die ansteigende Fahrbahn 3 der Schrägrampe bilden. Etwa auf halber Länge der Schrägrampe ist diese mit einem unten angebrachten einachsigen Fahrwerk 4 mit Rädern 5 versehen, um die Schrägrampe verfahren zu können.

An dem sich beim Betrieb der Schrägrampe auf der Fahrbahn 6 abstützenden Ende 7 der Schrägrampe ist mittig eine um eine senkrechte Achse verschwenkbare Deichsel 8 befestigt und zudem ein um eine waagerechte Achse verschwenkbares Auffahrtblech 9, das bei in der Wirkstellung befindlichen, ausgeklappten Deichsel 8 nach oben geklappt, jedoch nach unten auf den Boden geschwenkt ist, wenn die Deichsel 8 eingezogen ist, sich also mehr oder weniger unterhalb des Rampenendes befindet. Das zum Koppeln dienende Auge der Deichsel 8 ist bei 1o vorgesehen.

An einem Träger 1, ggfs. aber auch an beiden Trägern 1 ist aussen an den nach aussen gerichteten Schenkeln 11 der Träger 1 eine plattenartige Halterung 12 befestigt, an der eine Handwinde 13 mit Kurbel 14 und mit Zahnstange 15 einschl. Stützfuss 16 befestigt ist.

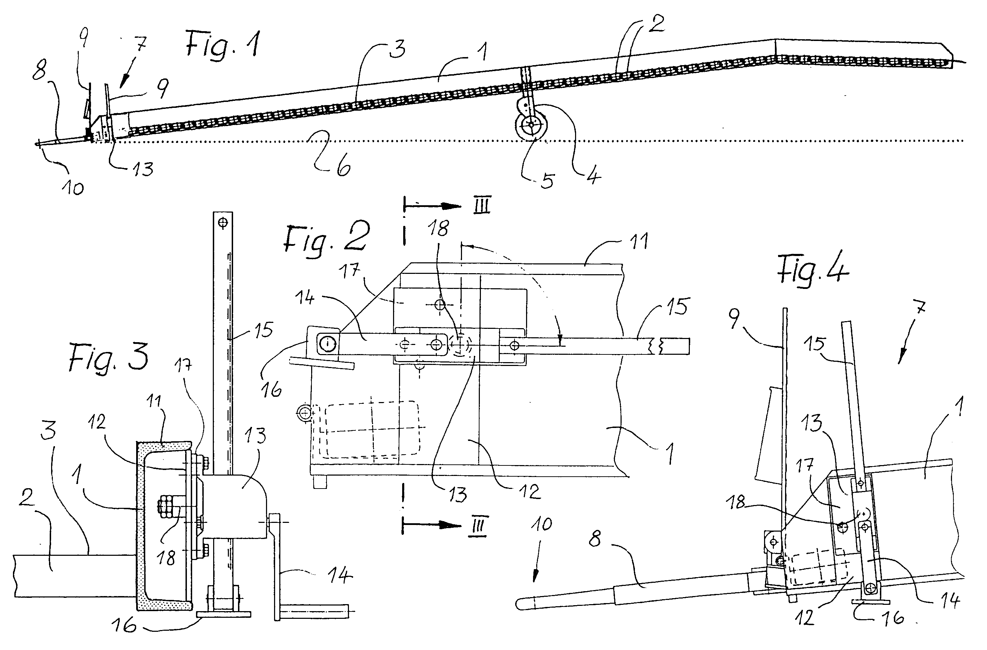

Gemäss Fig. 1, 3 und 4 befindet sich die Handwinde 13 in der Wirkstellung bei etwa senkrechter Zahnstange 15. Bei Nichtbenutzung der Handwinde 13 gemäss Fig. 2 verläuft die Zahnstange 15 etwa in Richtung der Träger 1 bzw. waagerecht; in dieser Stellung kann die Handwinde 13 beim Betrieb der Schrägrampe nicht stören. Damit die Handwinde 13 diese Stellung einnehmen kann, ist die Handwinde 13 über ihre Fussplatte 17 um eine waagerechte Achse 18 gemäss Fig. 2 um 90° verschwenkbar und in diesen Stellungen feststellbar.

Ist die Schrägrampe gemäss Fig. 1 verfahren, so stützt sich ihr Ende 7 auf der Fahrbahn 6 auf. Die Deichsel 8 muss dann nach hinten geschwenkt und das Überfahrblech 9 nach unten geklappt werden. Damit die Handwinde 13 nicht stört, wird sie in die Stellung gemäss Fig, 2 geschwenkt.

Soll nun nach Beendigung des Ladebetriebes die Schrägrampe an eine andere Stelle verfahren werden, wird zunächst der Zustand gemäss Fig. 1 wieder hergestellt.Durch Betätigen der Handwinde 13 bzw. Aufbocken des Endes 7 wird dieses auf die Höhe des bereitsstehenden Zugfahrzeuges gebracht. Alsdann kann der Fahrer des Fahrzeuges das Fahrzeug heranführen und die Koppelung vornehmen. Damit die Zahnstange 15 beim Verfahren nicht hinderlich ist, kann sie in die Stellung gemäss Fig. 2 gebracht werden. Ist die Schrägrampe an Ort und Stelle angelangt, wird sie entkuppelt, und sie kann dann von Hand oder durch Absenken mit Hilfe der Handwinde 13 auf die Fahrbahn 6 aufgesetzt werden.

## Patentansprüche

1. Fahrbare Schrägrampe mit einem auf etwa halber Länge angeordneten, vorzugsweise einachsigen Fahrwerk (4), einem im Bereich eines Rampenendes angeordneten Kupplungsglied (8) zum Ankoppeln der Schrägrampe an ein Zugfahrzeug und einer Stütze (13) zum Halten eines Rampenendes in Kopplungshöhe, dadurch gekennzeichnet, dass die Stütze als Hubelement (13) ausgeführt ist und dass das Kupplungsglied (8) und die Stütze (13) in dem Bereich des Rampenendes (7) angeordnet sind, das sich beim Betrieb der Schrägrampe auf der Fahrbahn (6) abstützt.

2. Rampe nach Anspruch 1, dadurch gekennzeichnet, dass das Hubelement (13) ein- oder beidseitig an der Rampe vorgesehen und an längs verlaufenden, an den seitlichen Rampenrändern befindlichen Trägern (1) der Rampe befestigt ist.

3. Rampe nach Anspruch 1, dadurch gekennzeichnet, dass das Hubelement (13) eine Handwinde, insb. eine Zahnstangenwinde ist.

4. Rampe nach Anspruch 1 - 3, dadurch gekennzeichnet, dass eine senkrechte, plattenartige Halterung (12) mit den seitlich nach aussen abstehenden Schenkeln (11) der Träger (1) verbunden und die Handwinde (13) über eine Fussplatte (17) an der Halterung (12) anliegt, wobei die Fussplatte (17) mit der Handwinde (13) um eine etwa senkrechte Achse (18) an der Halterung (12) verschwenkbar gelagert ist.

5. Rampe nach Anspruch 4, dadurch gekennzeichnet, dass eine Verschwenkbarkeit um etwa 90° in der Weise durchführbar ist, dass das Stützelement ( Zahnstange 15 ) der Handwinde (13) von der etwa senkrechten Wirkstellung in die etwa waagerechte Lage bzw. in eine Lage verschwenkbar ist, in der das Stützelement etwa parallel zu den längs verlaufenden Trägern (1) der Rampe verläuft.

6. Rampe nach Anspruch 1, dadurch gekennzeichnet, dass das Kupplungsglied (8) eine mittig am Stirnende-befestigte Deichsel (8) ist, die um eine senkrechte Achse von einer längs zur Rampe gerichteten Stellung quer dazu verschwenkbar ist.

## Claims

1. Mobile inclined ramp, having a chassis means (4) which is disposed substantially halfway along the length and is preferably single-axled, a coupling member (8) which is disposed in the region of one ramp end for coupling the inclined ramp to a towing vehicle, and a support (13) for retaining a ramp end at the coupling height, characterised in that the support is configured as lifting element (13), and in that the coupling member (8) and the support (13) are disposed in the region of the ramp end (7) which is supported on the roadway (6) during the operation of the inclined ramp.

2. Ramp according to claim 1, characterised in that the lifting element (13) is provided on one side or on both sides of the ramp and is mounted on carriers (1) of the ramp which extend longitudinally and are situated on the lateral ramp edges.

3. Ramp according to claim 1, characterised in that the lifting element (13) is a hand winch, more especially a rack jack.

4. Ramp according to claims 1 - 3, characterised in that a vertical, plate-like holder (12) is connected to the laterally outwardly protruding portions (11) of the carriers (1), and the hand winch (13) abuts against the holder (12) via a base plate (17), the base plate (17) together with the hand winch (13) being mounted on the holder (12) so as to be pivotable about a substantially vertical axis (18).

5. Ramp according to claim 4, characterised in that a pivotability about substantially 90° is accomplishable in such a manner that the supporting element (rack 15) of the hand winch (13) is pivotable from the substantially vertical operative position into the substantially horizontal position, i.e. into a position in which the supporting element extends substantially parallel to the longitudinally extending carriers (1) of the ramp.

6. Ramp according to claim 1, characterised in that the coupling member (8) is a towbar (8), which is mounted centrally on the end face and is pivotable about a vertical axis from a position orientated longitudinally relative to the ramp transversely thereto.

## Revendications

1. Rampe montante mobile, qui comporte un châssis (4), de préférence à un seul essieu, monté à environ la moitié de la longueur de la rampe, un élément (8) d'accouplement monté dans la région d'une extrémité de la rampe et servant à l'accouplement de la rampe à un véhicule tracteur, et un appui (13) servant à maintenir une extrémité de la rampe à hauteur de l'accouplement, caractérisée en ce que l'appui est réalisé en tant qu'élément (13) de levage et que l'élément (8) d'accouplement et l'appui (13) sont montés dans la région de l'extrémité (7) de la rampe qui s'appuie sur la voie (6) lors du fonctionnement de la rampe montante.

2. Rampe suivant la revendication 1, caractérisée en ce que l'élément (13) de levage est prévu d'un côté ou de part et d'autre de la rampe et est fixé à des poutrelles (1) de la rampe qui s'étendent longitudinalement et qui se trouvent sur les bords latéraux de la rampe.

3. Rampe suivant la revendication 1, caractérisée en ce que l'élément (13) de levage est un treuil à manivelle, notamment un treuil à crémaillère.

4. Rampe suivant les revendications 1 à 3, caractérisée en ce qu'un plateau (12) de fixation vertical est relié aux branches (11) des poutrelles (1) qui s'écartent latéralement vers l'extérieur et en ce que le treuil (13) à manivelle s'applique par l'intermédiaire d'une embase (17) au plateau (12) de fixation, l'embase (17) ayant le treuil (13) à manivelle étant montée basculante sur le plateau (12) de fixation par rapport à un axe (18) sensiblement perpendiculaire.

5. Rampe suivant la revendication 4, caractérisée en ce qu'il est possible de réaliser un basculement d'environ 90° par le fait que l'élément de soutien (crémaillère 15) du treuil (13) à manivelle peut être basculé de la position active sensiblement verticale à la position sensiblement horizontale et à une position dans laquelle l'élément de soutien s'étend sensiblement parallèlement aux poutrelles (1) de la rampe qui s'étendent longitudinalement.

6. Rampe suivant la revendication 1, caractérisée en ce que l'élément (8) d'accouplement est un timon (8) qui est fixé au milieu de l'extrémité frontale et qui peut être basculé par rapport à un axe vertical d'une position dans laquelle il est dirigé longitudinalement par rapport à la rampe longitudinale à une position dans laquelle il est dirigé transversalement par rapport à la rampe.
